# EUROPEAN PATENT SPECIFICATION

(11) **EP 4 640 336 B1**
(45) Date of publication and mention of the grant of the patent: **11.11.2026**
(21) Application number: 25171455.6
(22) Date of filing: 18.04.2025
(51) Int. Cl.: B21D 43/22, B65G 57/03, B65G 15/10, B65G 57/06, B21D 43/00

(54) **STACKING APPARATUS FOR STACKING FLAT SHEETS**
STAPELVORRICHTUNG ZUM STAPELN VON FLACHEN PLATTEN
DISPOSITIF D'EMPILAGE POUR EMPILER DES PLAQUES PLANES

(30) Priority: 23.04.2024 IT 202400009220
(43) Date of publication of application: 29.10.2025
(73) Proprietor: F.I.M.I. - Fabbrica Impianti Macchine Industriali - S.p.A., 23897 Viganò (LC) (IT)
(72) Inventor: MAGNANI, Giulio, 23897 Viganò LC (IT)
(74) Representative: Rondano, Davide

(56) References cited:
- CN-A- 113 844 709
- DE-A1- 102009 007 987
- US-A- 2 273 689
- US-A- 3 491 902

## Description

### Technical field of the invention

The present invention relates to a stacking apparatus for stacking flat sheets, in particular (though not exclusively) metal sheets produced from metal strips.

### State of the art

Metal sheets are typically produced from metal strips (whose thickness may be up to 25 mm) wound into coils, by first unwinding, straightening and flattening the strip to form a flat sheet, and then transversely cutting the strip to form a series of flat sheets. The flat sheets thus obtained are typically stacked on top of each other by means of a stacking apparatus to form sheet stacks which are then sent to a packaging line for final packaging of such sheet stacks.

Known stacking apparatuses typically include a conveyor system for conveying the sheets one after the other into a stacking area, a lower platform on which the sheets, once they reach the stacking area, are dropped one on top of the other, and a series of aligning devices for aligning each time, both longitudinally and transversely, the sheet that has just been dropped with respect to the underlying sheets which have already been stacked. US3491902A discloses a stacking apparatus comprising the features of the preamble of independent claim 1. A further stacking apparatus is disclosed in CN113844709A.

Such known stacking apparatuses have a number of drawbacks.

First of all, the use of aligning devices for aligning each time the sheet that has just been dropped with respect to the underlying sheets that have already been stacked results in relative slipping between the surfaces of the sheets and this causes scratches in the surface of the sheets, which reduces the quality of the final product. To limit the extent of sheet surface scratching, the stroke of the aligning devices can be reduced, but this does not allow to handle significant misalignment of the sheets that may occur during transport of the sheets between the transverse shear apparatus and the stacking apparatus.

Furthermore, in order to enable the sheets to be aligned by means of the aligning devices, a free perimetral area around the sheet stack must be provided, which results in that the falling sheets produce considerable noise, especially in the case of large and heavy sheets, which reduces the comfort of the people working in the plant.

### Summary of the invention

It is an object of the present invention to provide a stacking apparatus for stacking flat sheets, in particular metal sheets, which is not affected by the above-mentioned drawbacks of the prior art.

More particularly, it is an object of the present invention to provide a stacking apparatus for stacking flat sheets, in particular metal sheets, which makes it possible to avoid, or at least to significantly reduce with respect to the prior art, scratching of the surface of the flat sheets during stacking and which makes it possible to considerably reduce the noise generated by the falling flat sheets. These and other objects are fully achieved according to the invention by a stacking apparatus as defined in the appended independent claim 1.

Advantageous embodiments of the stacking apparatus according to the invention are defined in the dependent claims, whose subject-matter is to be understood as forming an integral part of the following description.

In summary, the present invention is based on the idea of positioning, centring and aligning each flat sheet to be stacked before dropping it onto the underlying platform and the underlying stack of flat sheets, as well as on the idea of creating around the flat sheet to be dropped a sort of laterally closed box, with continuous walls placed against the two longitudinal sides of the flat sheets itself.

By virtue of such a solution, there is no need to move each time the newly dropped flat sheet, either longitudinally or transversely, in order to align it with the underlying flat sheets, and therefore the risk of scratching the surface of the flat sheet is avoided, which keeps the surface quality of the stacked flat sheets unchanged. Furthermore, with such a solution, even significant misalignments between the flat sheets that are being fed to the apparatus can be easily managed without affecting the efficiency of the apparatus. Finally, the fact that the flat sheets are dropped into a sort of closed box creates an air cushion between the falling flat sheet and the underlying stack of flat sheets, which significantly reduces the noise level produced by the falling flat sheet.

### Brief description of the drawings

Further features and advantages of the present invention will become clearer from the following description, which is given purely as non-limiting example with reference to the accompanying drawings, where:
- Figure 1 is a perspective view showing part of a plant for the production of metal flat sheets, with a conveyor belt for feeding sheets from a transverse shear station and with a stacking station comprising a plurality of stacking apparatuses according to the present invention, arranged in series one after the other along the feed direction of the metal sheets;
- Figure 2 is a plan view of a stacking apparatus of the same type as the ones shown in Figure 1;
- Figure 3 is a perspective view of one of the two modules of the stacking apparatus of Figure 2;
- Figure 4 is an internal side view of the module of Figure 3;
- Figure 5 is a cross-sectional view of the module of Figure 3, according to the section plane indicated V-V in Figure 4;
- Figures 6 to 12 are perspective views showing in sequence the operation of the stacking apparatus of Figure 2.

### Detailed description

In the following description, reference will be made for convenience to the use of the stacking apparatus for stacking metal sheets, but as already noted above, the invention is equally applicable for stacking flat sheets of any other material (e.g. wood or plastic material).

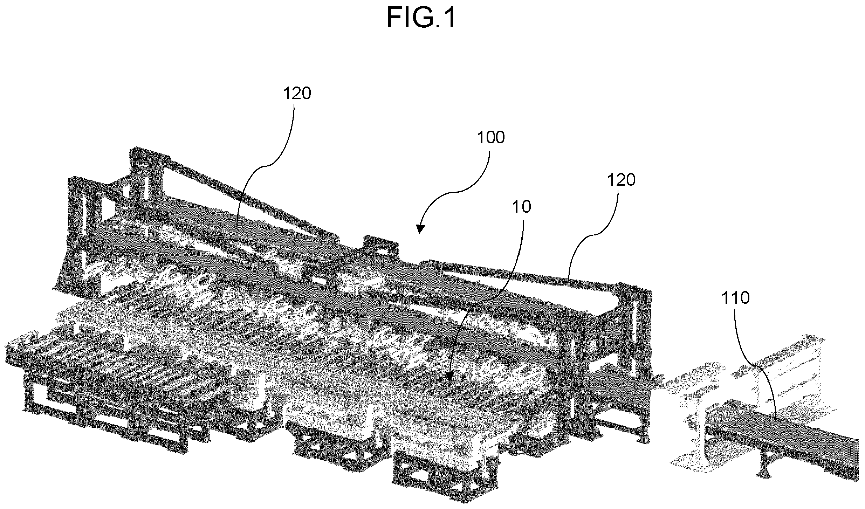

Referring first to Figure 1, a stacking station for stacking flat metal sheets (hereinafter simply referred to, for convenience, as sheets) on top of each other to form sheet stacks of is generally indicated with 100 and comprises at least one stacking apparatus 10 arranged downstream of a conveyor belt 110 by means of which the sheets to be stacked (not shown) are fed along a horizontal feed direction. In the example of Figure 1, the stacking station 100 comprises four identical stacking apparatuses 10 arranged in series one after the other so as to be able to operate with sheets of different lengths. In particular, the stacking station 100 of Figure 1 is capable of creating up to four sheet stacks of a given base length (equal to the length of each individual stacking apparatus 10, for example a length of 4 metres), up to two sheet stacks with a length equal to twice the above-mentioned base length, or even one sheet stack of with a length equal to four times the above-mentioned base length. Of course, the number of stacking apparatuses 10 provided in the stacking station 100, as well as the length of the stacking apparatus(es) 10, may vary depending on the specific application. The stacking apparatuses 10 of the stacking station 100 are fixed to a stationary frame 120, which may be configured as a bridge (as in the example illustrated in Figure 1) in the case of lateral exit of the sheet stacks, or with side legs in the case of longitudinal exit of the sheet stacks.

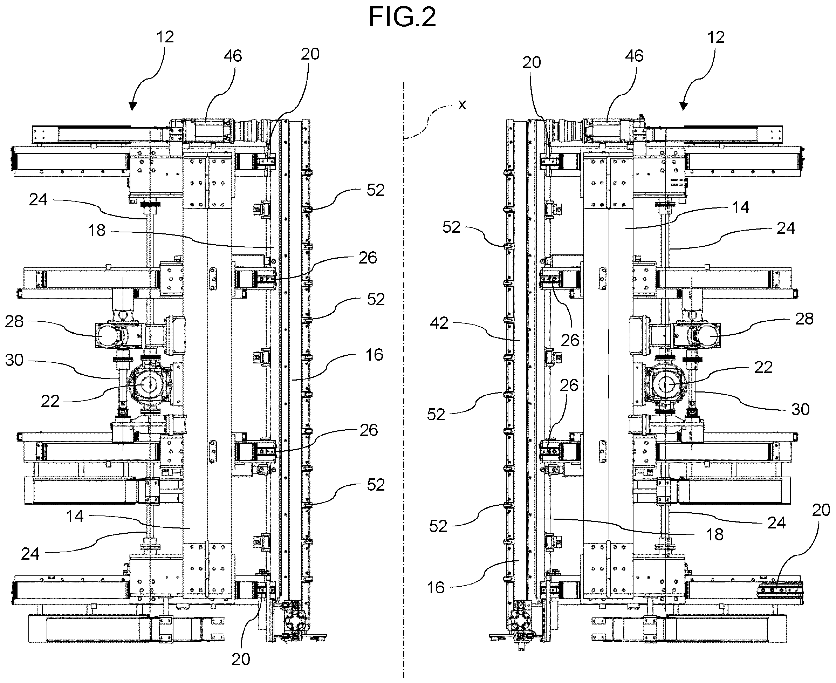

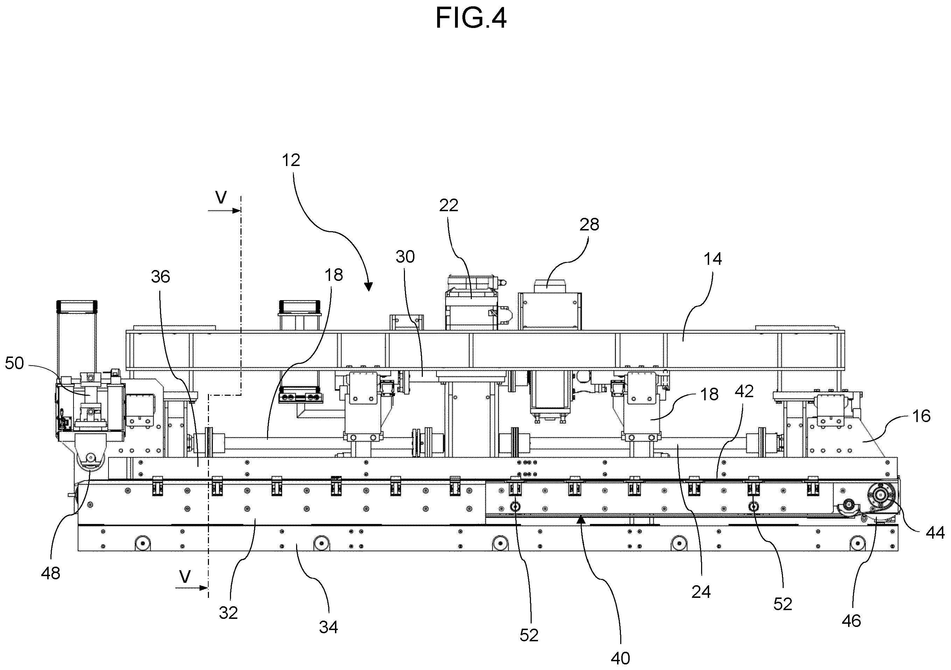

With reference now to Figures 2 to 5, the structure of each stacking apparatus 10 will be described.

Each stacking apparatus 10 comprises two modules 12 having a mirrored configuration and positioned one in front of the other, symmetrically with respect to a vertical centreline plane of the stacking apparatus 10 substantially passing through the afore-mentioned feed direction (denoted by x).

Each module 12 basically comprises a stationary support structure 14, a main movable unit 16 and a secondary movable unit 18.

The support structure 14 is fixed to the frame 120 of the stacking station 100, while the main movable unit 16 and the secondary movable unit 18 are both supported by the support structure 14 so as to be able to translate independently of each other in a transverse direction, i.e. along a horizontal direction perpendicular to the feed direction x, relative to the support structure 14.

More specifically, according to the illustrated embodiment the main movable unit 16 is slidably mounted on linear guideways 20, in particular of the type with recirculating sliding blocks, and is driven by a drive unit 22, which comprises in particular an electric motor and an angular gear, by means of a transmission system preferably comprising, for each linear guideway 20, a respective transmission shaft 24 and a respective motion conversion mechanism (not shown), for example a rack and pinion mechanism. Likewise, according to the illustrated embodiment, the movable secondary unit 18 is slidably mounted on linear guideways 26, in particular of the type with recirculating sliding blocks, and is driven by a drive unit 28, which comprises in particular an electric motor and an angular gear, by means of a transmission system preferably comprising, for each linear guideway 26, a respective transmission shaft 30 and a respective motion conversion mechanism (not shown), for example a rack and pinion mechanism.

As will be illustrated in detail below, by their movement in the transverse direction the main movable unit 16 and the secondary movable unit 18 have the function of transversely centring the sheet to be stacked, ensuring its perfect transverse alignment with respect to the underlying sheet stack, as well as the function of providing a substantially flat transverse guide surface for transversely guiding the sheet to be stacked as it falls onto the underlying sheet stack.

In this respect, the main movable unit 16 comprises a vertical side wall 32 extending substantially along the entire length of the stacking apparatus 10 (for example, a length of 4 metres), while the secondary movable unit 18 comprises a pair of vertical side walls 34 and 36, that is a lower vertical side wall and an upper vertical side wall, respectively, which also extend substantially along the entire length of the stacking apparatus 10 and are arranged below and above the vertical side wall 32 of the main movable unit 16, respectively. The vertical side walls 32, 34 and 36 are all oriented parallel to the afore-mentioned vertical centreline plane of the stacking apparatus 10.

The vertical side wall 32 is integral with the structure of the main movable unit 16, and therefore moves along with the latter in the transverse direction.

The lower vertical side wall 34 is integral with the structure of the secondary movable unit 18, and therefore moves along with the latter in the transverse direction, while the upper vertical side wall 36 is movable in the transverse direction with respect to the structure of the secondary movable unit 18, and therefore with respect to the lower vertical side wall 34, in particular under control of a pair of linear actuators 38, formed for example by hydraulic cylinders. More specifically, the upper vertical side wall 36 is movable in the transverse direction between a fully extended position, in which it is perfectly aligned with the lower vertical side wall 34, and a fully retracted position, in which it is shifted outwardly with respect to the lower vertical side wall 34, i.e. it is at a greater distance from the vertical centreline plane of the stacking apparatus 10 than the lower vertical side wall 34.

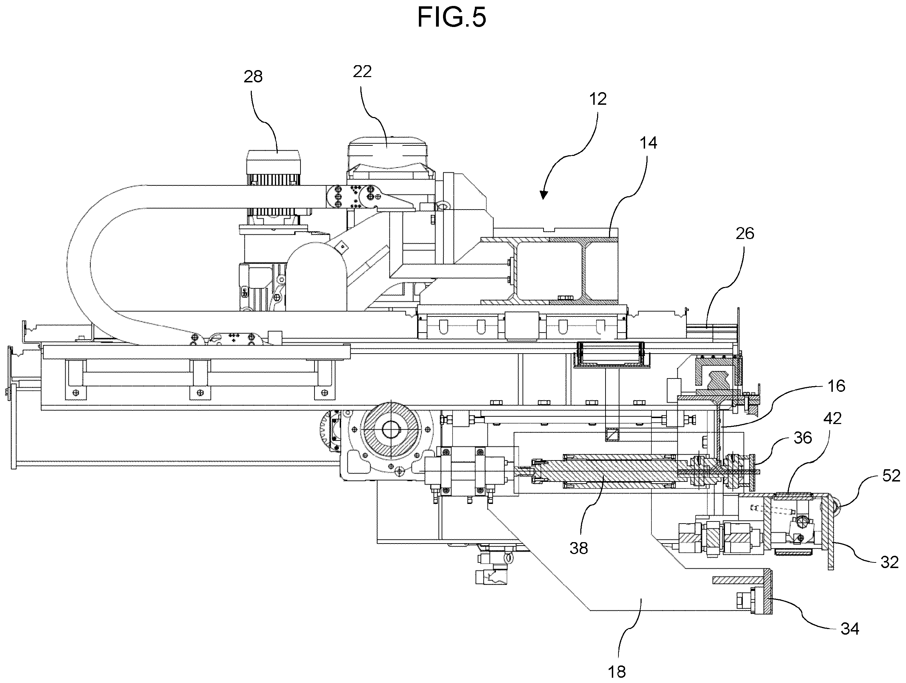

At the beginning of the sheet stacking process, the secondary movable unit 18 is suitably positioned according to the width of the sheets to be stacked, in particular so that the distance between the lower side walls 34 of the secondary movable units 18 of the two modules 12 of the stacking apparatus 10 is slightly greater than the width of the sheets to be stacked. For example, in the case of sheets having a width of 1500 mm, the lower vertical side walls 34 will be positioned at a distance from each other preferably equal to about 1501-1502 mm, thus with a clearance of 1-2 mm between the sheet to be stacked and the lower vertical side walls 34. This clearance may, however, vary according to specific requirements. On the other hand, the upper side vertical wall 36 of the secondary movable unit 18 is positioned in a fully retracted position (as shown in Figure 5), hence so that the clearance between the upper vertical side walls 36 of the two modules 12 of the stacking apparatus 10 is maximum, in order to allow transport of the sheets to be stacked even under the worst centring and alignment conditions.

The main movable unit 16 is provided with a conveyor device 40 arranged to cause each time the sheet to be stacked to move forward along the feed direction x until it reaches the stacking position, i.e. a position in which the sheet is substantially aligned longitudinally with the underlying sheet stack. As shown in Figure 5, the conveyor device 40 is arranged laterally more externally than the vertical side wall 32.

In the illustrated embodiment, the conveyor device 40 comprises a toothed belt 42 wound on pulleys 44 and a drive unit 46 (formed in particular by an electric motor and a gear reducer) arranged to rotate one of the pulleys 44 for driving the toothed belt 42. Preferably, the conveyor device 40 further comprises a pressure wheel 48, which is positioned above the toothed belt 42 in the entry area of the stacking apparatus 10, thus in the region of the initial section of the toothed belt 42, and is actuatable by a linear actuator 50, formed in particular by a hydraulic cylinder, to press each time the sheet to be stacked against the toothed belt 42, so as to ensure the required friction for a precise and controlled positioning and stopping of the sheet in the longitudinal direction (i.e. along the feed direction x).

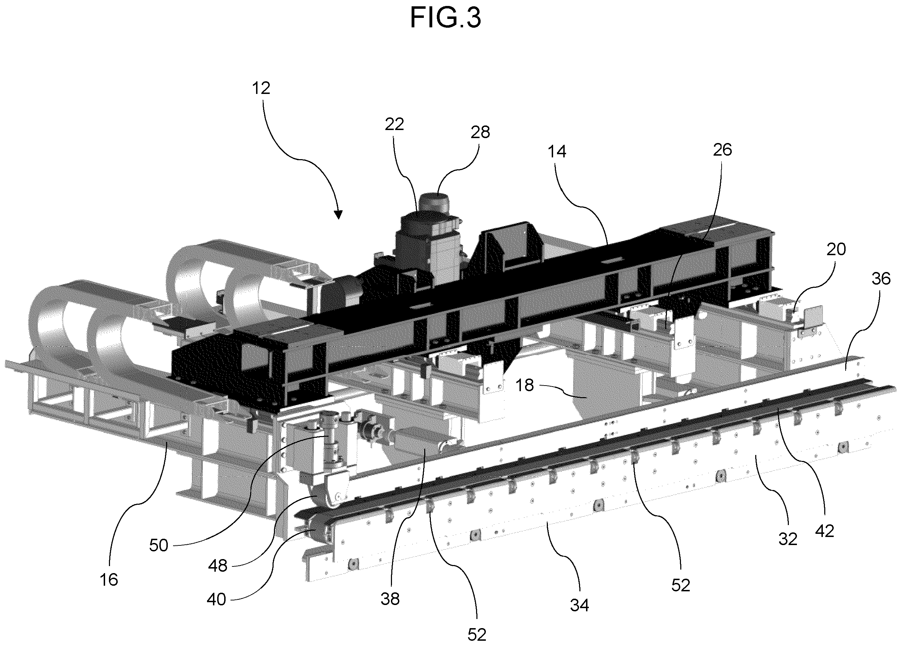

The main movable unit 16 further comprises a plurality of idle rollers 52 positioned transversely with respect to the feed direction x, i.e. rotating about respective axes of rotation parallel to the feed direction x. The idle rollers 52 are movable, for example under control of a series of hydraulic cylinders, between a lowered position (shown in Figures 3 to 5), in which they are completely below the upper branch of the toothed belt 42 of the conveyor device 40, so as not to interfere with the sheet when the latter is being transported by the conveyor device towards the stacking position, and a raised position (not shown in Figures 1 to 5), in which they protrude upwardly at least partially with respect to the upper branch of the toothed belt 42 so as to lift the sheet carried by the conveyor device 40 by detaching it from the toothed belt 42.

The main movable unit 16 is movable in the transverse direction between a transport position (shown in Figure 3), in which the toothed belt 42 of the conveyor device 40 protrudes laterally inwards with respect to the upper vertical side wall 36 of the secondary movable unit 18, to allow transport of the sheet to be stacked by means of the toothed belt 42 towards the stacking position, and an unloading position (not shown in Figures 2 to 5), in which the vertical side wall 32 of the main movable unit 16 is substantially aligned with the lower vertical side wall 34 of the secondary movable unit 18. The transport position of the main movable unit 16 may vary so as to be optimized depending on the dimensional characteristics of the sheets to be stacked and on their transverse flexibility: wider and/or thinner, thus more flexible, sheets require, in fact, a wider support area than narrower and/or thicker, thus more rigid, sheets, so that in the first case the toothed belt 42 of the conveyor device 40 will have to protrude more inwards than in the second case.

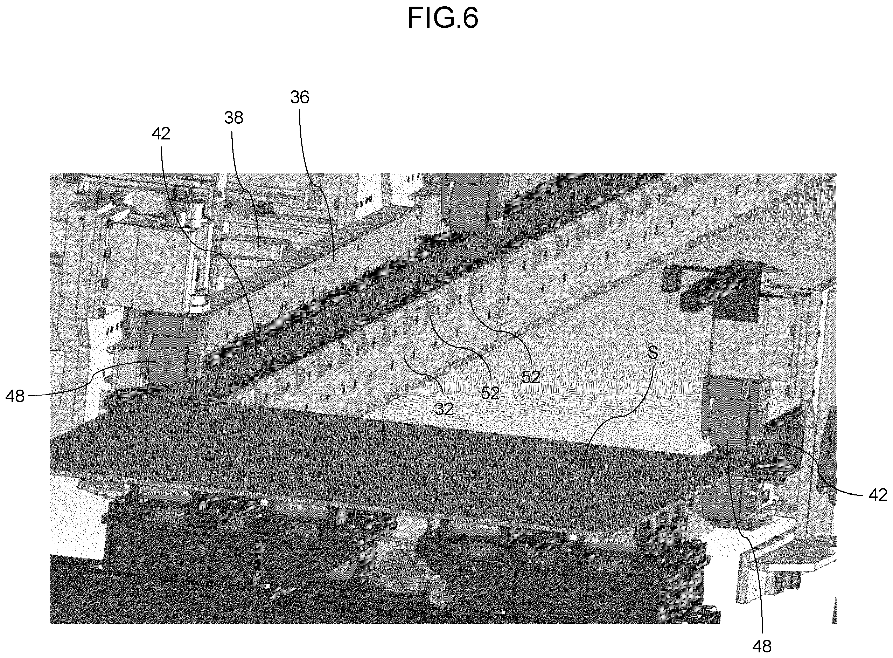

With reference to Figures 6 to 12, the operation of the stacking apparatus 10 will be described now, assuming that the sheets to be stacked have a length not greater than that of the stacking apparatus 10 and that, therefore, the stacking operation can be performed by one stacking apparatus only.

Before the sheet to be stacked (indicated with S in Figures 6 to 12) reaches the stacking apparatus 10, the various movable components of the two modules 12 of the apparatus described above must be positioned as follows.

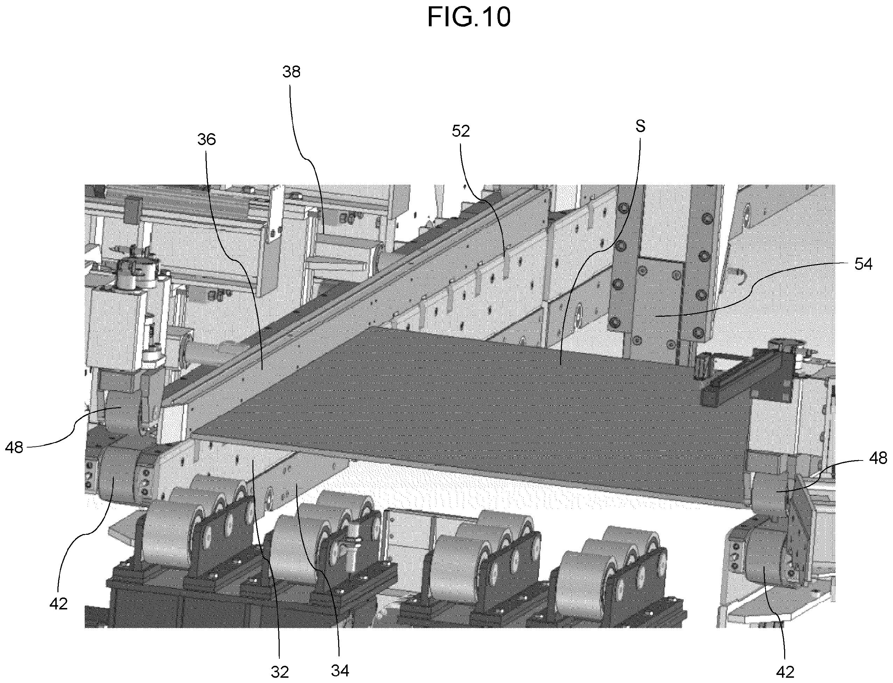

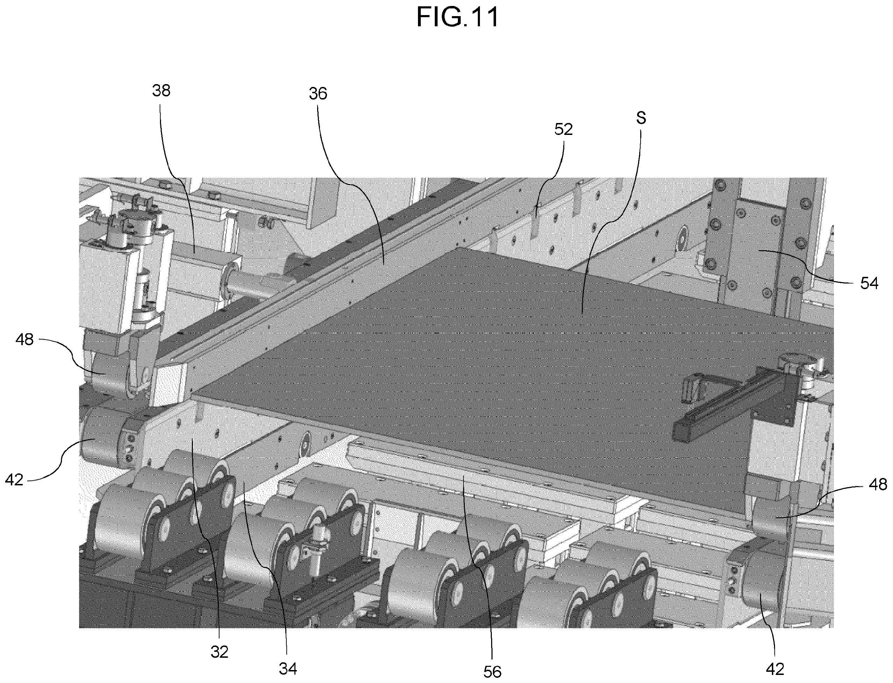

The lower vertical side walls 34 of the secondary movable units 18 of the two modules 12 must be positioned so that their distance is slightly greater (by about 1-2 mm) than the width of the sheet S. In addition, a head stop member 54 (which can be seen in Figures 10 and 11) of the stacking apparatus 10, which is arranged between the two modules 12 and is movable both in the vertical direction, between a lowered operating position, in which it defines a vertical abutment surface for the sheet S directed perpendicular to the feed direction x, and a raised non-operating position, and along the feed direction x, in order to be able to adapt itself to sheets S of different lengths, will be positioned at a distance from a fixed tail stop member (not shown) that is slightly longer (for example, by about 1-2 mm) than the length of the sheet S. The main movable units 16 must be positioned so as to ensure the maximum contact area between the surface of the toothed belts 42 of the conveyor devices 40 of the two modules 12 and the sheet S, for optimal transport and positioning of the sheet S itself. The upper vertical side walls 36 of the secondary movable units 18 of the two modules 12 must be in the fully retracted position, hence at the maximum distance from each other, so as to allow transport of the sheets S even in case of poor centring and alignment. Furthermore, the pressure wheels 48 of the main movable units 16 of the two modules 12 must be in the raised position, so as to allow even sheets S that are not perfectly flat to enter the stacking apparatus 10, while the idle rollers 52 must be in the lowered position, so as not to interfere with the sheet S arriving at the stacking apparatus 10. Finally, the toothed belts 42 of the conveyor devices 40 of the two modules 12 must move at the same forward speed with which the sheets S are moved forward along the feed direction x by the conveyor belt 110, or at least by the last section (i.e. the section immediately upstream of the stacking apparatus 10) of the conveyor belt 110.

Figure 6 shows the condition in which, with the various movable components of the stacking apparatus 10 positioned as described above, the sheet S to be stacked, transported by the conveyor belt 110, arrives at the entry area of the stacking apparatus 10. The arrival of the sheet S is detected by a photocell (not shown, but, in any case, of a type per se known), positioned at the afore-mentioned entry line of the stacking apparatus 10. The passage of the head of sheet S through the light beam of the photocell causes the stacking cycle to start.

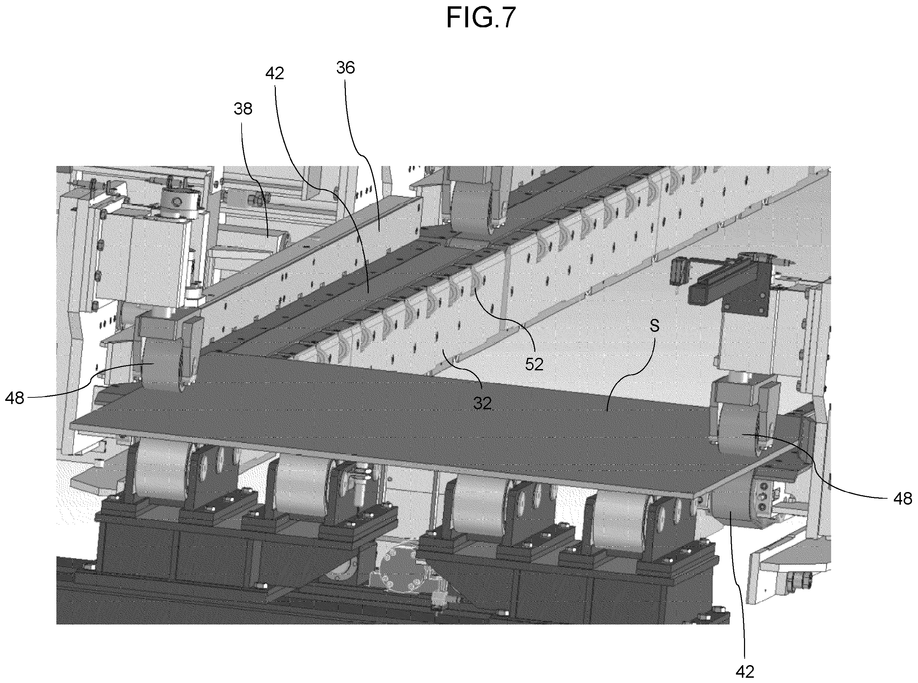

As shown in Figure 7, the sheet S is moved forward between the two modules 12 of the stacking apparatus 10 by means of the toothed belts 42 of the conveyor devices 40, supported on the toothed belts 42 at its opposite side portions. To ensure maximum adhesion between the sheet S and the toothed belts 42, the pressure wheels 48 of the main movable units 16 of the two modules 12 are pressed against the upper surface of the sheet S.

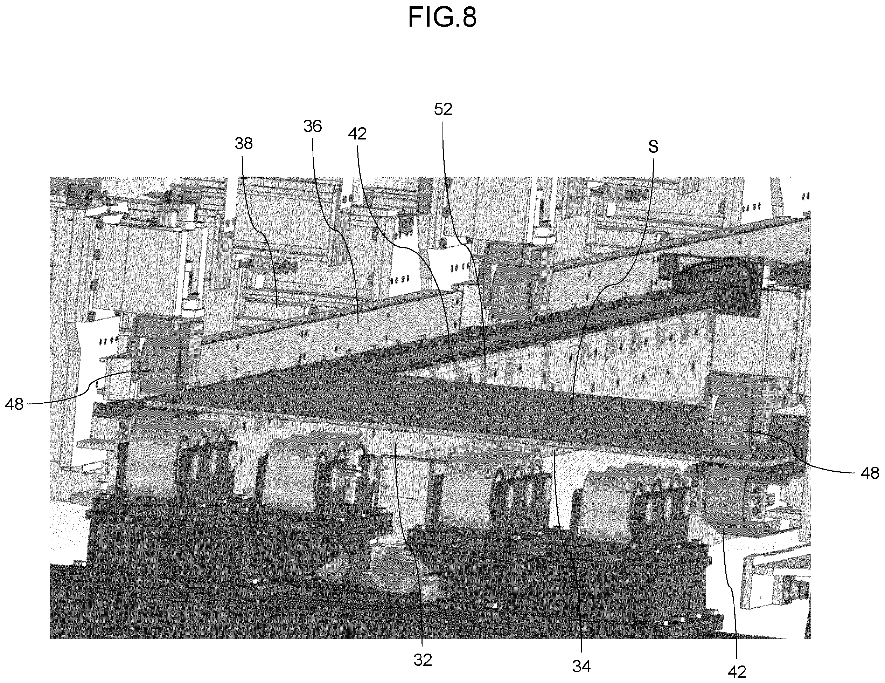

As soon as sheet S has reached the desired longitudinal position, the toothed belts 42 are stopped and the pressure wheels 48 are raised, as shown in Figure 8.

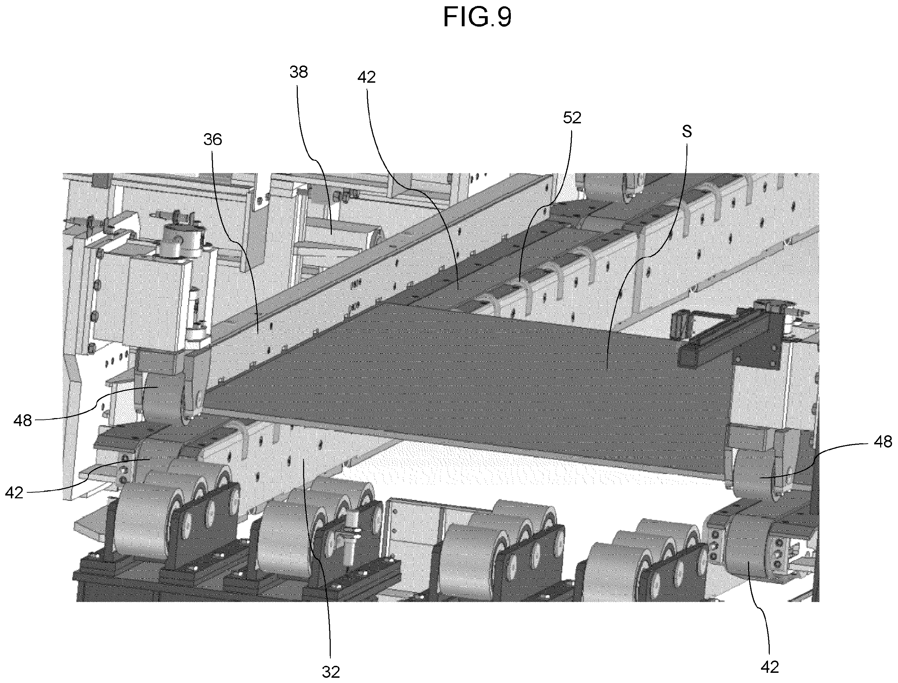

At this point (Figure 9), the idle rollers 52 are also raised, so as to detach the sheet S from the toothed belts 42 and allow the upper vertical side walls 36 of the secondary movable units 18 of the two modules 12, suitably controlled by the respective linear actuators 38, to align and transversally centre the sheet S (which is supported at this stage only by the idle rollers 52). More specifically, in this step the upper vertical side walls 36 are moved by the respective linear actuators 38 to the fully extended position, in which each of them is perfectly aligned with the respective lower vertical side wall 34.

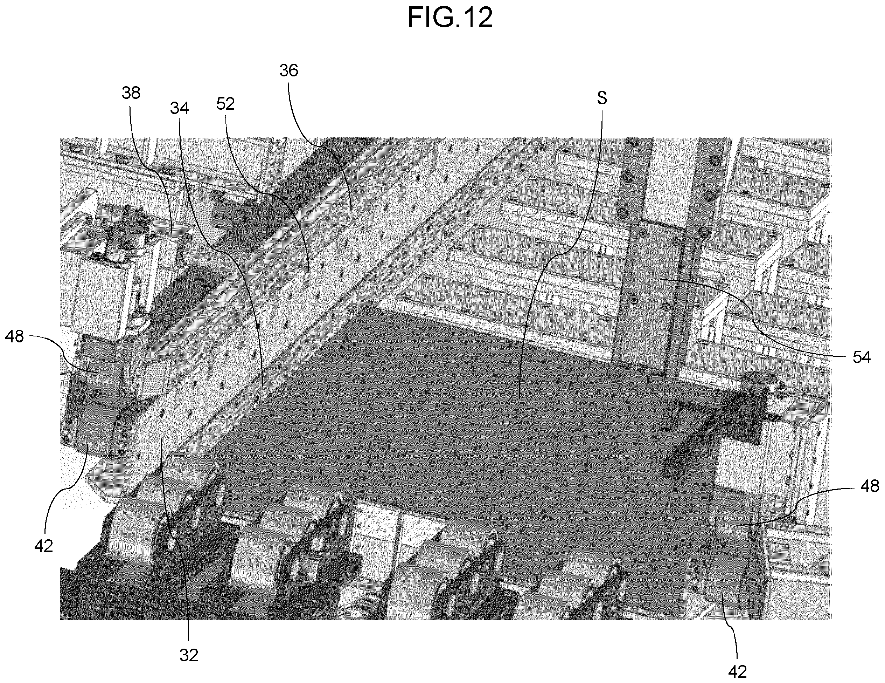

As shown in Figure 10, the main movable units 16 are then moved to the unloading position, so that the vertical side wall 32 of each main movable unit 16 is substantially aligned with the lower vertical side wall 34 of the secondary movable unit 18 of the respective module 12. In this way, the vertical side walls 32, 34 and 36 of each module 12 are perfectly aligned with each other and the sheet S, no longer supported by the idle rollers 52, can fall by gravity (Figure 11) onto an underlying platform 56 (preferably positioned at a height substantially corresponding to that of the median height of the lower vertical side wall 34 of the secondary movable unit 18 of each of the two modules 12) or, in the case where one or more sheets have already been stacked, on an underlying sheet stack, which is in any case preferably continuously maintained at a position corresponding to that of the median height of the vertical side wall 34, by controlled lowering of the underlying platform 56 as the number of stacked sheets increases. At this point, as shown in Figure 12, the main movable units 16 of the two modules are brought back to the transport position and the upper vertical side walls 36 are brought back to the fully extended position to allow the stacking apparatus 10 to receive the next sheet to be stacked.

Thanks to the fact that the vertical side walls 32, 34 and 36 of the two modules 12 form a sort of laterally closed drop box for the entire drop height of the sheet, with a reciprocal distance just slightly greater (about 1-2 mm more) than the width of the sheet itself, each sheet falling onto the underlying sheet stack is already aligned with the latter, without the need for further alignment movements and resulting risk of surface damage to the sheet. In addition, the closed configuration of this drop box also makes it possible to considerably reduce the level of noise resulting from the fall of the sheet, thanks to the air cushion thus generated, which produces a dampening and silencing effect.

The present invention has been described herein with reference to a preferred embodiment thereof, but other embodiments may of course be envisaged as defined by the appended claims.

## Claims

1. Apparatus (10) for stacking flat sheets (S), such as metal sheets, to form sheet stacks, the apparatus (10) comprising a pair of modules (12) arranged substantially symmetrically with respect to a vertical centreline plane of the apparatus (10) parallel to a horizontal feed direction (x) along which each time a sheet (S) to be stacked is fed,
wherein each module (12) comprises a stationary support structure (14), a main movable unit (16) and a secondary movable unit (18),
wherein each module (12) further comprises first actuator means (22, 24) for controlling the movement of the main movable unit (16) in said transverse direction and second actuator means (28, 30) for controlling the movement of the secondary movable unit (18) in said transverse direction,
wherein the main movable unit (16) of each module (12) comprises a conveyor device (40) for transporting along said feed direction (x) the sheet (S) to be stacked, so that the sheet (S) is supported by the conveyor devices (40) of the two modules (12) at opposite side portions thereof,
wherein the secondary movable unit (18) of each module (12) comprises a lower vertical side wall (34) and an upper vertical side wall (36), which are oriented parallel to said centreline vertical plane, and
wherein said first actuator means (22, 24) of each module (12) are arranged to control the movement of the main movable unit (16) of said module (12) in said transversal direction between a transport position, in which the conveyor device (40) protrudes laterally inwards with respect to the upper vertical side wall (36) of the secondary movable unit (18) of said module (12) to allow transport of the sheet (S) by means of the conveyor device (40), and an unloading position, in which the vertical side wall (32) of the main movable unit (16) of said module (12) is substantially aligned with the lower vertical side wall (34) of the secondary movable unit (18) of said module (12),
**characterized in that**: the main movable unit (16) and the secondary movable unit (18) of each module (12) are both supported by the support structure (14) of the respective module (12) so as to be movable independently of each other in a transverse direction, i.e. along a horizontal direction perpendicular to said feed direction (x), with respect to the support structure (14),
and the main movable unit (16) further comprises a vertical side wall (32), which is oriented parallel to said vertical centreline plane and is arranged laterally further inwards than the conveyor device (40), and wherein the lower vertical side wall (34) and the upper vertical side wall (36) are arranged below and above the vertical side wall (32) of the main movable unit (16) of the respective module (12), respectively, and further comprises third actuator means (38) associated with the upper vertical side wall (36) for controlling the movement of the latter in said transverse direction with respect to the lower vertical side wall (34) to centre and transversely align the sheet (S) supported by the main movable unit (16).

2. Apparatus according to claim 1, wherein said third actuator means (38) are arranged to control the movement of the upper vertical side wall (36) of said secondary movable unit (18) of each module (12) in said transverse direction between a fully extended position, in which the upper vertical side wall (36) is aligned with the lower vertical side wall (34) of said secondary movable unit (18), and a fully retracted position, in which said upper vertical side wall (36) is displaced outwardly relative to said lower vertical side wall (34).

3. Apparatus according to claim 1 or claim 2, wherein the main movable units (16) of the two modules (12) further comprise respective lifting means (52) for lifting the sheet (S) relative to the conveyor device (40) so as to enable the sheet (S) to be centred and transversely aligned by displacement of the upper vertical side walls (36) of the secondary movable units (18) of the two modules (12) in said transverse direction.

4. Apparatus according to claim 3, wherein said lifting means (52) comprise a plurality of idle rollers (52), which are rotatably arranged about respective axes of rotation parallel to said feed direction (x) and are movable between a lowered position, in which they are completely below a supporting surface of the conveyor device (40) of the main movable unit (16) of the respective module (12), so as not to interfere with the sheet (S) when the latter is transported by said conveyor device (40), and a raised position, in which they protrude upwardly at least partially with respect to said supporting surface.

5. Apparatus according to any one of the preceding claims, wherein the two modules (12) further comprise respective pressure wheels (48) arranged to be pressed against the sheet (S) while the latter is being moved forward by means of the conveyor devices (40).

6. Apparatus according to any one of the preceding claims, further comprising a head stop device (54) which is disposed between the two modules (12) and is movable both in a vertical direction, between a lowered operating position, in which it defines a vertical abutment surface for the sheet (S) directed perpendicular to said feed direction (x), and a raised non-operating position, and along said feed direction (x), to adapt itself to sheets (S) of different lengths.

7. Stacking station comprising a plurality of stacking apparatuses (10) according to any one of the preceding claims, arranged in series one after the other along said feed direction (x).

8. Station according to claim 7, comprising a stationary frame (120) to which the support structures (14) of the two modules (12) of each stacking apparatus (10) are fixed.

## Patentansprüche

1. Einrichtung (10) zum Stapeln von flachen Blechen (S), wie Metallblechen, um Blechstapel auszubilden, die Einrichtung (10) umfassend ein Paar von Modulen (12), die im Wesentlichen hinsichtlich einer vertikalen Mittellinienebene der Einrichtung (10) parallel zu einer horizontalen Zuführrichtung (x), entlang der jedes Mal ein zu stapelndes Blech (S) zugeführt wird, symmetrisch arrangiert sind,
wobei jedes Modul (12) eine feststehende Stützstruktur (14), eine bewegbare Haupteinheit (16) und eine bewegbare Sekundäreinheit (18) umfasst,
wobei jedes Modul (12) ferner erste Stellantriebsmittel (22, 24) zum Steuern der Bewegung der bewegbaren Haupteinheit (16) in die Querrichtung und zweite Stellantriebsmittel (28, 30) zum Steuern der Bewegung der bewegbaren Sekundäreinheit (18) in die Querrichtung umfasst,
wobei die bewegbare Haupteinheit (16) jedes Moduls (12) eine Fördervorrichtung (40) zum Transportieren des zu stapelnden Blechs (S) entlang der Zuführrichtung (x) umfasst, sodass das Blech (S) durch die Fördervorrichtungen (40) der zwei Module (12) an gegenüberliegenden Seitenabschnitten davon gestützt wird,
wobei die bewegbare Sekundäreinheit (18) jedes Moduls (12) eine untere vertikale Seitenwand (34) und eine obere vertikale Seitenwand (36), die zu der vertikalen Ebene der Mittellinie parallel orientiert sind, umfasst, und
wobei die ersten Stellantriebsmittel (22, 24) jedes Moduls (12) arrangiert sind, um die Bewegung der bewegbaren Haupteinheit (16) des Moduls (12) in die Querrichtung zwischen einer Transportposition, in der die Fördervorrichtung (40) hinsichtlich der oberen vertikalen Seitenwand (36) der bewegbaren Sekundäreinheit (18) des Moduls (12) seitlich nach innen vorsteht, um den Transport des Blechs (S) mittels der Fördervorrichtung (40) zu erlauben, und einer Entladeposition, in der die vertikale Seitenwand (32) der bewegbaren Haupteinheit (16) des Moduls (12) im Wesentlichen an der unteren vertikalen Seitenwand (34) der bewegbaren Sekundäreinheit (18) des Moduls (12) ausgerichtet ist, zu steuern,
**dadurch gekennzeichnet, dass** die bewegbare Haupteinheit (16) und die bewegbare Sekundäreinheit (18) jedes Moduls (12) beide durch die Stützstruktur (14) des jeweiligen Moduls (12) gestützt werden, um in eine Querrichtung, d. h. entlang einer horizontalen Richtung senkrecht zu der Zuführrichtung (x), hinsichtlich der Stützstruktur (14) unabhängig voneinander bewegbar zu sein,
und die bewegbare Haupteinheit (16) ferner eine vertikale Seitenwand (32), die an der vertikalen Mittellinienebene parallel orientiert ist und seitlich weiter innen als die Fördervorrichtung (40) arrangiert ist, und wobei die untere vertikale Seitenwand (34) und die obere vertikale Seitenwand (36) unterhalb beziehungsweise oberhalb der vertikalen Seitenwand (32) der bewegbaren Haupteinheit (16) des jeweiligen Moduls (12) arrangiert sind, und ferner dritte Stellantriebsmittel (38), die mit der oberen vertikalen Seitenwand (36) zum Steuern der Bewegung der letzteren in die Querrichtung hinsichtlich der unteren vertikalen Seitenwand (34) verknüpft sind, umfasst, um das Blech (S), das durch die bewegbare Haupteinheit (16) gestützt wird, zu zentrieren und quer auszurichten.

2. Einrichtung nach Anspruch 1, wobei die dritten Stellantriebsmittel (38) arrangiert sind, um die Bewegung der oberen vertikalen Seitenwand (36) der bewegbaren Sekundäreinheit (18) jedes Moduls (12) in die Querrichtung zwischen einer vollständig ausgefahrenen Position, in der die obere vertikale Seitenwand (36) an der unteren vertikalen Seitenwand (34) der bewegbaren Sekundäreinheit (18) ausgerichtet ist, und einer vollständig eingefahrenen Position, in der die obere vertikale Seitenwand (36) relativ zu der unteren vertikalen Seitenwand (34) nach außen verschoben ist, zu steuern.

3. Einrichtung nach Anspruch 1 oder 2, wobei die bewegbaren Haupteinheiten (16) der zwei Module (12) ferner jeweilige Hebemittel (52) zum Anheben des Blechs (S) relativ zu der Fördervorrichtung (40) umfassen, um zu ermöglichen, dass das Blech (S) durch Verschiebung der oberen vertikalen Seitenwände (36) der bewegbaren Sekundäreinheiten (18) der zwei Module (12) in die Querrichtung zentriert und quer ausgerichtet wird.

4. Einrichtung nach Anspruch 3, wobei die Hebemittel (52) eine Vielzahl von Laufrollen (52), umfassen, die um jeweilige Drehachsen parallel zu der Zuführrichtung (x) drehbar arrangiert sind und zwischen einer abgesenkten Position, in der sie vollständig unterhalb einer Stützoberfläche der Fördervorrichtung (40) der bewegbaren Haupteinheit (16) des jeweiligen Moduls (12) sind, um das Blech (S) nicht zu behindern, wenn letzteres durch die Fördervorrichtung (40) transportiert wird, und einer angehobenen Position, in der sie hinsichtlich der Stützoberfläche mindestens teilweise nach oben vorstehen, bewegbar sind.

5. Einrichtung nach einem der vorstehenden Ansprüche, wobei die zwei Module (12) ferner jeweilige Druckräder (48), die arrangiert sind, um gegen das Blech (S) gedrückt zu werden, während letzteres mittels der Fördervorrichtungen (40) vorwärts bewegt wird, umfassen.

6. Einrichtung nach einem der vorstehenden Ansprüche, ferner umfassend eine Kopfanschlagvorrichtung (54), die zwischen den zwei Modulen (12) angeordnet ist und sowohl in eine vertikale Richtung zwischen einer abgesenkten Betriebsposition, in der sie eine vertikale Anlageoberfläche für das Blech (S) definiert, die senkrecht zu der Zuführrichtung (x) gerichtet ist, und einer angehobenen Außerbetriebsposition als auch entlang der Zuführrichtung (x) bewegbar ist, um sich an Bleche (S) unterschiedlicher Längen anzupassen.

7. Stapelstation, umfassend eine Vielzahl von Stapeleinrichtungen (10) nach einem der vorstehenden Ansprüche, die entlang der Zuführrichtung (x) in Reihe nacheinander arrangiert sind.

8. Station nach Anspruch 7, umfassend einen feststehenden Rahmen (120), an den die Stützstrukturen (14) der zwei Module (12) jeder Stapeleinrichtung (10) befestigt sind.

## Revendications

1. Appareil (10) permettant d'empiler des feuilles plates (S), telles que des feuilles métalliques, pour former des piles de feuilles, l'appareil (10) comprenant une paire de modules (12) agencés de manière sensiblement symétrique par rapport à un plan médian vertical de l'appareil (10) parallèle à une direction d'alimentation horizontale (x) le long de laquelle à chaque fois une feuille (S) à empiler est introduite,
dans lequel chaque module (12) comprend une structure de support fixe (14), une unité mobile principale (16) et une unité mobile secondaire (18),
dans lequel chaque module (12) comprend en outre des premiers moyens d'actionnement (22, 24) pour commander le déplacement de l'unité mobile principale (16) dans ladite direction transversale et des deuxièmes moyens d'actionnement (28, 30) pour commander le déplacement de l'unité mobile secondaire (18) dans ladite direction transversale,
dans lequel l'unité mobile principale (16) de chaque module (12) comprend un dispositif de transport (40) pour transporter le long de ladite direction d'alimentation (x) la feuille (S) à empiler, de sorte que la feuille (S) est supportée par les dispositifs de transport (40) des deux modules (12) au niveau de parties latérales opposées de celle-ci,
dans lequel l'unité mobile secondaire (18) de chaque module (12) comprend une paroi latérale verticale inférieure (34) et une paroi latérale verticale supérieure (36), qui sont orientées parallèlement audit plan vertical central et, et
dans lequel lesdits premiers moyens d'actionnement (22, 24) de chaque module (12) sont agencés pour commander le déplacement de l'unité mobile principale (16) dudit module (12) dans ladite direction transversale entre une position de transport, dans laquelle le dispositif de transport (40) fait saillie latéralement vers l'intérieur par rapport à la paroi latérale verticale supérieure (36) de l'unité mobile secondaire (18) dudit module (12) pour permettre le transport de la feuille (S) au moyen du dispositif de transport (40), et une position de déchargement, dans laquelle la paroi latérale verticale (32) de l'unité mobile principale (16) dudit module (12) est sensiblement alignée sur la paroi latérale verticale inférieure (34) de l'unité mobile secondaire (18) dudit module (12),
**caractérisé en ce que** l'unité mobile principale (16) et l'unité mobile secondaire (18) de chaque module (12) sont toutes deux supportées par la structure de support (14) du module (12) respectif de manière à être mobiles indépendamment l'une de l'autre dans une direction transversale, c'est-à-dire le long d'une direction horizontale perpendiculaire à ladite direction d'alimentation (x), par rapport à la structure de support (14),
et l'unité mobile principale (16) comprend en outre une paroi latérale verticale (32), qui est orientée parallèlement audit plan médian vertical et est agencée latéralement plus à l'intérieur que le dispositif de transport (40), et dans lequel la paroi latérale verticale inférieure (34) et la paroi latérale verticale supérieure (36) sont agencées respectivement en dessous et au-dessus de la paroi latérale verticale (32) de l'unité mobile principale (16) du module (12) respectif, respectivement, et comprend en outre des troisièmes moyens d'actionnement (38) associé à la paroi latérale verticale supérieure (36) pour commander le mouvement de cette dernière dans ladite direction transversale par rapport à la paroi latérale verticale inférieure (34) afin de centrer et d'aligner transversalement la feuille (S) supportée par l'unité mobile principale (16).

2. Appareil selon la revendication 1, dans lequel lesdits troisièmes moyens d'actionnement (38) sont agencés pour commander le déplacement de la paroi latérale verticale supérieure (36) de ladite unité mobile secondaire (18) de chaque module (12) dans ladite direction transversale entre une position complètement déployée, dans laquelle la paroi latérale verticale supérieure (36) est alignée sur la paroi latérale verticale inférieure (34) de ladite unité mobile secondaire (18), et une position complètement rétractée, dans laquelle ladite paroi latérale verticale supérieure (36) est déplacée vers l'extérieur par rapport à ladite paroi latérale verticale inférieure (34).

3. Appareil selon la revendication 1 ou la revendication 2, dans lequel les unités mobiles principales (16) des deux modules (12) comprennent en outre des moyens de levage (52) respectifs pour soulever la feuille (S) par rapport au dispositif de transport (40) de manière à permettre à la feuille (S) d'être centrée et alignée transversalement par le déplacement des parois latérales verticales supérieures (36) des unités mobiles secondaires (18) des deux modules (12) dans ladite direction transversale.

4. Appareil selon la revendication 3, dans lequel lesdits moyens de levage (52) comprennent une pluralité de rouleaux fous (52), qui sont agencés de manière rotative autour d'axes de rotation respectifs parallèles à ladite direction d'alimentation (x) et sont mobiles entre une position abaissée, dans laquelle ils sont complètement en dessous d'une surface de support du dispositif de transport (40) de l'unité mobile principale (16) du module (12) respectif, de manière à ne pas interférer avec la feuille (S) lorsque cette dernière est transportée par ledit dispositif de transport (40), et une position levée, dans laquelle ils font saillie vers le haut au moins partiellement par rapport à ladite surface de support.

5. Appareil selon l'une quelconque des revendications précédentes, dans lequel les deux modules (12) comprennent en outre des roues de pression (48) respectives agencées pour être pressées contre la feuille (S) pendant que cette dernière est déplacée vers l'avant au moyen des dispositifs de transport (40).

6. Appareil selon l'une quelconque des revendications précédentes, comprenant en outre un dispositif de butée de tête (54) qui est disposé entre les deux modules (12) et est mobile à la fois dans une direction verticale, entre une position de fonctionnement abaissée, dans laquelle il définit une surface de butée verticale pour la feuille (S) orientée perpendiculairement à ladite direction d'alimentation (x), et une position de non-fonctionnement relevée, et le long de ladite direction d'alimentation (x), pour s'adapter à des feuilles (S) de différentes longueurs.

7. Station d'empilage comprenant une pluralité d'appareils d'empilage (10) selon l'une quelconque des revendications précédentes, agencés en série les uns après les autres le long de ladite direction d'alimentation (x).

8. Station selon la revendication 7, comprenant un bâti fixe (120) auquel sont fixées les structures de support (14) des deux modules (12) de chaque appareil d'empilage (10).
